# EUROPÄISCHE PATENTANMELDUNG

(11) **EP 3 611 108 A1**
(43) Veröffentlichungstag der Anmeldung: **19.02.2020**
(21) Anmeldenummer: 17198722.5
(22) Anmeldetag: 26.10.2017
(51) Int. Cl.: B65D 23/08

(54) **BECHER- ODER SCHALENFÖRMIGE VERPACKUNG**

(30) Priorität: 02.11.2016 DE 102016120920
(71) Anmelder: Coveris Rigid (Zell) Deutschland GmbH, 56856 Zell (Mosel) (DE)
(72) Erfinder:
(74) Vertreter: Patentanwaltzkanzlei Hutzelmann

(57) **Zusammenfassung**

Becher- oder schalenförmige Verpackung mit einem Unterteil (1) und/oder einem Deckel (31) aus einem thermoformbaren und/oder spritzgießbaren Material, vorzugsweise einem Kunststoff, wobei wenigstens eine Oberfläche hinsichtlich ihres Erscheinungsbildes und/oder ihrer Haptik modifiziert ausgebildet ist.

## Beschreibung

Die Erfindung bezieht sich auf eine becher- oder schalenförmige Verpackung mit einem Unterteil und/oder einem Oberteil aus einem thermoformbaren und/oder spritzgießbaren Material, vorzugsweise einem Kunststoff.

Es sind verschiedenste Verpackungen dieses Typs, die sowohl Becher, Schalen als auch Deckel umfassen, bekannt, die jedoch eine glatte Oberfläche aufweisen, die vor allem in taktiler Hinsicht keinen hochwertigen Eindruck hinterlässt.

Oftmals wird daher eine Bandarole oder dergleichen aus Papier, Pappe oder Karton eingesetzt, um ein hochwertiges und angenehmes Erscheinungsbild sicherzustellen.

Dies ist jedoch sehr aufwendig.

Der Aufgabe liegt daher die Aufgabe zugrunde, auf günstige Art und Weise ein ebenbürtiges Erscheinungsbild zu erzeugen, das zudem noch unempfindlich gegenüber Umwelteinflüssen sein soll.

Diese Aufgabe wird erfindungsgemäß dadurch gelöst, daß wenigstens eine Oberfläche hinsichtlich ihres Erscheinungsbildes und/oder ihrer Haptik modifiziert ausgebildet ist.

Dadurch wird eine angenehme und einen hochwertigen Eindruck hinterlassende Oberfläche geschaffen.

Dabei hat es sich als sehr vorteilhaft erwiesen, wenn die Oberfläche partiell oder vollflächig mit einer oder mehreren Strukturen versehen ist.

Durch die Struktur wird eine angenehme Haptik erzielt. Dabei ist es denkbar, daß entweder eine feine Struktur, welche die taktilen Eigenschaften verbessert, oder eine grobe Struktur, welche beispielsweise Erscheinungsformen erzeugen, die sehr nahe an Wellpappe oder dergleichen liegen. Eine Kombination feiner und grober Strukturen ist denkbar. Ebenso denkbar sind mehrere feine und/oder mehrere grobe Strukturen bzw. Mischformen davon.

Sehr vorteilhaft ist es erfindungsgemäß auch, wenn ein IML, das heisst ein In-Mould-Label vorgesehen ist, welche in eine Tiefziehform oder eine Spritzgußform eingelegt ist und dann die Verpackung hergestellt wird, wobei das IML mit der beabsichtigten Oberfläche ausgerüstet ist und so die gewünschte Oberfläche mit Strukturierung erzeugt wird.

Hierdurch wird auf einfache Art und Weise die gewünschte, papierähnliche und hochwertige Haptik erzeugt.

Weiterhin hat es sich erfindungsgemäß als sehr vorteilhaft erwiesen, wenn die Oberfläche mit einem Lackauftrag versehen ist.

Sehr vorteilhaft ist es, wenn der Lackauftrag mit einem Druckverfahren erfolgt.

Ein solcher Lackauftrag macht die jeweilige Oberfläche weicher. Der Lackauftrag kann beispielsweise mit einem Druckverfahren erfolgen, wodurch bereits eine Struktur erzeugt werden kann.

Dabei ist es gemäß einer weiteren Ausgestaltung der Erfindung sehr vorteilhaft, wenn der Lackauftrag mit einer strukturierten Auftragswalze vorgenommen worden und so die Oberflächenstruktur eingebracht ist.

Damit wird in einem Schritt die Oberflächenbeschichtung durch Lackauftrag als auch eine Oberflächenstrukturierung erzeugt.

Äußerst vorteilhaft ist es dabei auch, wenn der Lackauftrag einen Mattlack umfasst.

Ein Mattlack erzeugt ebenfalls ein angenehmes taktiles Gefühl und kann den Eindruck einer Papier- oder Pappe-Oberfläche erzeugen.

Eine weitere sehr vorteilhafte Weiterbildung der Erfindung liegt vor, wenn die Tiefziehform mit einer oder mehreren Oberflächenstrukturen ausgerüstet ist und so die Strukturierung in den Becher und/oder den Deckel eingebracht worden ist.

Dies ist eine sehr einfache, aber effektive Herstellungsmöglichkeit. Die Strukturierung kann dabei beispielsweise in den Wandungen oder dem Spiegel vorgesehen sein.

Äußerst vorteilhaft ist es erfindungsgemäß, wenn die Strukturtiefe einer Struktur zwischen 10 und 60 µm, vorzugsweise zwischen 30 und 50 µm beträgt.

Hiermit wurden beste taktile Ergebnisse erzielt. Bei Verwendung eines IML wird in der Regel eine geringere Strukturtiefe vorgesehen wie bei direkter Modifizierung einer Oberfläche.

Äußerst vorteilhaft ist es erfindungsgemäß auch, wenndie Strukturtiefe einer Struktur zwischen 60 und 2000 µm, vorzugsweise zwischen 100 und 1000 µm beträgt.

Durch eine solch grobe Struktur lässt sich beispielsweise sehr gut der Eindruck von Wellpappe erzeugen.

Gemäß einer weiteren Fortbildung der Erfindung ist es auch sehr vorteilhaft, wenn die Strukturierung jeder Struktur im Werkzeug durch Ätzen, Lasern und/oder mechanische Bearbeitung erzeugt ist.

Dadurch lassen sich unterschiedliche Strukturen in unterschiedlicher Feinheit erzeugen. Mit allen diesen so erzeugten Werkzeugen wurden hervorragende Ergebnisse erzielt.

Ebenfalls sehr vorteilhaft ist es erfindungsgemäß, wenn die Verpackung aus einer mehrschichtigen, vorzugsweise mindestens zweischichtigen Kunststofffolie hergestellt ist.

Eine solche Verpackung kann beispielsweise an ihrer Außenseite eine haptisch angepasste Folienschicht aufweisen, die auch aus einem IML oder einer Beschichtung bestehen kann. Im Inneren befindet sich die eigentliche Tragschicht und auf der Innenseite beispielsweise eine Barriereschicht.

Gemäß einer weiteren Ausgestaltung der Erfindung ist es sehr vorteilhaft, wenn die einzige oder zumindest die äußerste Folienschicht gefüllt ist.

Auch damit lassen sich haptische und taktile Veränderungen erzielen.

Dabei ist es sehr vorteilhaft, wenn mineralische Füllstoffe, vorzugsweise Kalk als Füllmaterial vorgesehen ist, wobei der Anteil an Füllmaterial zwischen 10 und 30 Gew-Prozent betragen kann, vorzugsweise um die 20 Gew-Prozent.

Mit einer solchen Füllung wurden beste Ergebnisse hinsichtlich haptischen Eigenschaften als auch hinsichtlich Anmutung erzielt. Es konnte der Eindruck einer Papierverpackung erzeugt werden. Durch einen zusätzlichen matten Lackauftrag kann das Ergebnis nochmals verbessert werden.

Im folgenden wird die Erfindung anhand von zwei Ausführungsbeispielen veranschaulicht.

Dabei zeigen:
- Fig. 1: ein Schaubild einer erfindungsgemäßen Schale mit einem Boden und vier daran anschließenden Seitenwänden,

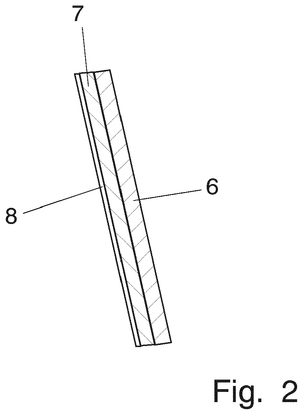

- Fig. 2: einen Schnitt durch eine der Seitenwände,
- Fig. 3: ein Schaubild eines erfindungsgemäßen Deckels,
- Fig. 4: einen Schnitt durch die Deckelfläche.

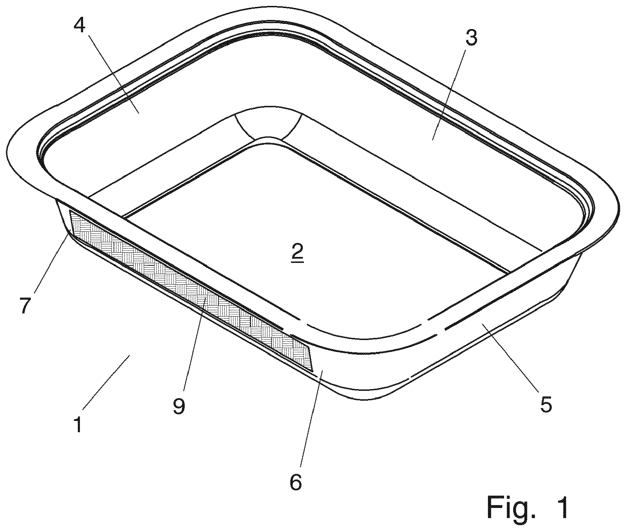

Mit 1 ist in Fig. 1 ein schalenförmiger Behälter mit einem Boden 2 und vier daran angrenzenden Seitenwänden 3, 4, 5 und 6 bezeichnet. Dabei sind auch runde, ovale oder abgerundete Formen denkbar.

Derartige Schalen 1 werden in der Regel im Tiefziehverfahren oder auch im Spritzgußverfahren aus thermoplastisch verformbaren Stoffen, wie beispielsweise PE, PET, PP; PLA oder anderen Kunststoffen hergestellt.

Diese Schalen weisen eine glatte Oberfläche auf.

Kunststoffen wird heutzutage keine hochwertige Anmutung zugesprochen. Zudem ist gerade im Hinblick auf die Entsorgung von Kunststoffen diese Kunststoffanmutung problematisch.

Eine Aufmachung, die den Anschein einer Papieroberfläche erweckt ist hier deutlich besser und wird leichter akzeptiert.

Hierzu wird gemäß der vorliegenden Erfindung die Oberfläche wenigstens in Teilbereichen modifiziert.

Im vorliegenden Ausführungsbeispiel sind die Seitenwände 3, 4, 5 und 6 mit einem speziellen IML 7 ausgerüstet, welches beim Tiefziehen der Schale 1 in die Form eingelegt wird und dann eine Kunststofffolie in diese Form hinein tiefgezogen wird.

Das IML 7 ist auf seiner Außenseite, die der Tiefziehform zugewandt ist, mit einem Lack 8, hier einem transparenten Lack 8 beschichtet, der mittels einer strukturierten Beschichtungswalze auf das IML 7 aufgebracht wurde.

Die Strukturierung der Beschichtungswalze bewegt sich idealer Weise im Bereich von 30 bis 50 µm Rautiefe. Eine Rautiefe zwischen 10 und 60µm ist denkbar.

Die Strukturierung 9 ist dabei eher unregelmäßig, wobei Wiederholungen und Regelmäßigkeiten auch vorgesehen sein können. Die Strukturierung der Walze wird durch Ätzen, Lasern oder mechanische Bearbeitung erzeugt.

Durch die feine Strukturierung erhält die Oberfläche des IML einen papierähnlichen Charakter und zwar nicht nur in optischer, sonder auch in haptischer Hinsicht.

Der Lackauftrag 8 kann dabei auch direkt auf eine bereits produzierte Schale 1, oder direkt auf die tiefzuziehende Kunststofffolie erfolgen.

Der Lackauftrag 8 kann einen Mattlack umfassen.

Bei Verwendung des Spritzgußverfahrens zur Herstellung der Schale 1 ist der Einsatz eines IML 7 besonders anzuraten.

Es ist auch denkbar, daß die Strukturierung 9 erst beim Tiefziehen oder Spritzgießen der Schale 1 selbst erfolgt, das heisst, daß die Spritzguß- bzw. Tiefziehform selbst an den gewünschten Stellen bzw. Bereichen entsprechend strukturiert ist.

Diese Ausgestaltung der Erfindung kann nicht nur auf die in diesem Ausführungsbeispiel angesprochenen Schalen 1 angewendet werden, sondern es können auch Becher oder Deckel 31 für Verpackungen geschaffen werden. Besonders gut lassen sich beispielsweise Schnappdeckel für Schalen 1 erzeugen, die zumindest in haptischer Hinsicht den Eindruck von Papier vermitteln.

Der Verzicht auf den Lackauftrag ist denkbar.

Der Folienaufbau kann zwei oder mehr Schichten umfassen, wobei eine Innenschicht 21 aus einer Barriere, einer mittleren Tragschicht 22 und der äußeren, die Papierhaptik umfassende Schicht 23 besonders zweckdienlich ist.

Es ist auch denkbar, daß zumindest in derjenigen Schicht 23, welche die Papierhaptik aufweist, ein mineralischer Füllstoff, insbesondere Kalk mit einem Anteil zwischen 10 und 30 Gew-%, vorzugsweise um die 20 Gew-% vorgesehen ist. Durch diesen Füllstoff in Zusammenhang der oben beschriebenen Mikrostrukturierung wird ebenfalls eine Papierhaptik erzeugt. Der Einsatz eines Mattlackes 8 zum Abdecken der Schicht 23 ist denkbar, wobei die Strukturierung 9 dann im Mattlack 8 vorgesehen sein sollte. Beim Einsatz eines mineralischen Füllstoffes kann auch auf die Strukturierung verzichtet werden.

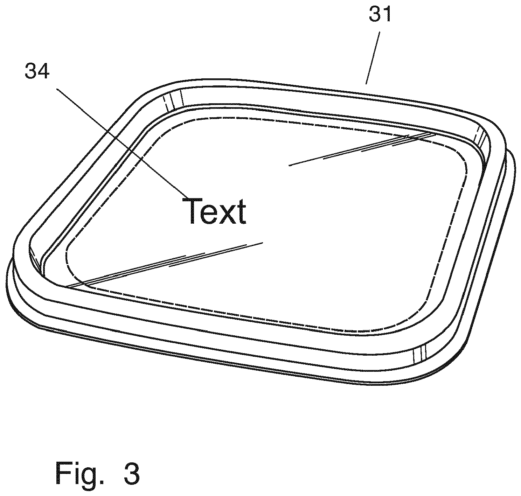

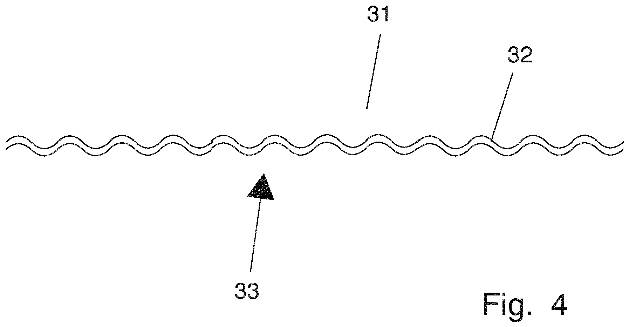

Gemäß eines weiteren Ausführungsbeispiels, wie es in den Fig. 3 und 4 dargestellt ist, kann zusätzlich oder alternativ noch eine zweite, wesentlich grobere Strukturierung vorgesehen sein.

Dieses Ausführungsbeispiel ist anhand eines Deckels 31 veranschaulicht.

Die grobere Struktur 32 ist in diesem Ausführungsbeispiel wellenförmig angeordnet und kann in etwa der Struktur einer Wellpappe entsprechen.

Hierdurch wird nochmals die Papierhaptik verstärkt.

Im vorliegenden Ausführungsbeispiel ist die Strukturierung in Kombination mit einem Mattlack besonders effizient. Der dargestellte Deckel 31 ist auf seiner Innenseite 33 entsprechend ausgerüstet, wohingegen auf seiner Außenseite ein Druckbild 34 vorgesehen ist.

Besonders die Kombination aus grober Strukturierung, gefüllter Oberflächenschicht und Mattlack bringt gute Ergebnisse hervor.

Dabei ist es denkbar, daß bei Kombination der Mikrostrukturierung und der groberen Strukturierung 32 die im Bereich von 60 bis 200 µm, vorzugsweise zwischen 100 und 1000µm Tiefe aufweist, die Unterscheidung von Papier hinsichtlich haptischer Eigenschaften sehr schwer sein wird.

Die grobe Strukturierung kann auch andere Formen aufweisen, jedoch hat die Wellenstruktur die besten Ergebnisse gezeigt.

Die grobe Strukturierung 32 des Deckels 31 wird durch eine enstprechende Tiefzieh- bzw. Spritzgußform erzeugt.

Dieses Ausführungsbeispiel ist nicht nur auf Deckel 31 beschränkt, sondern ist auch für Becher und Schalen mit verschiedensten Formen und Abmessungen denkbar.

In der Regel wird ein strukturiertes IML beim Spritzgießen, aber auch beim Thermoforming, d.h. Tiefziehen, eingesetzt. Insbesondere beim Thermoforming kann auch auf das IML verzichtet werden, so daß die Struktur in der jeweiligen Form vorgesehen ist. Vorher kann zur Verbesserung der Haptik mit einem Druckverfahren ein vorzugsweise matter Lack aufgebracht werden.

Beim Thermoforming liegt die Materialstärke eines Deckels in der Regel zwischen 200 und 600µm, bevorzugt bei etwa 450µm.

Beim Thermoformfing weist ein Becher bzw. eine Schale in der Regel Materialstärken zwischen 400 und 1000µm, bevorzugt zwischen 600 und 800 µm auf.

## Patentansprüche

1. Becher- oder schalenförmige Verpackung mit einem Unterteil und/oder einem Deckel aus einem thermoformbaren und/oder spritzgießbaren Material, vorzugsweise einem Kunststoff, **dadurch gekennzeichnet, daß** wenigstens eine Oberfläche hinsichtlich ihres Erscheinungsbildes und/oder ihrer Haptik modifiziert ausgebildet ist.

2. Verpackung nach Anspruch 1, **dadurch gekennzeichnet, daß** die Oberfläche partiell oder vollflächig mit einer oder mehreren Strukturen versehen ist.

3. Verpackung nach Anspruch 1 oder 2, **dadurch gekennzeichnet, daß** ein IML, das heisst ein In-Mould-Label vorgesehen ist, welche in eine Tiefziehform oder eine Spritzgußform eingelegt ist und dann die Verpackung hergestellt wird, wobei das IML mit der beabsichtigten Oberfläche ausgerüstet ist und so die gewünschte Oberfläche mit Strukturierung erzeugt wird.

4. Verpackung nach einem der vorangehenden Ansprüche, **dadurch gekennzeichnet, daß** die Oberfläche mit einem Lackauftrag versehen ist.

5. Verpackung nach Anspruch 4, **dadurch gekennzeichnet, daß** der Lackauftrag mit einem Druckverfahren aufgebracht ist.

6. Verpackung nach Anspruch 4, **dadurch gekennzeichnet, daß** der Lackauftrag mit einer strukturierten Auftragswalze vorgenommen worden und so die Oberflächenstruktur eingebracht ist.

7. Verpackung nach Anspruch 4, 5 oder 6, **dadurch gekennzeichnet, daß** der Lackauftrag einen Mattlack umfasst.

8. Verpackung nach einem der vorangehenden Ansprüche, **dadurch gekennzeichnet, daß** die Tiefziehform mit einer oder mehreren Oberflächenstrukturen ausgerüstet ist und so die Strukturierung in den Becher und/oder den Deckel eingebracht worden ist.

9. Verpackung nach einem der vorangehenden Ansprüche, **dadurch gekennzeichnet, daß** die Strukturtiefe einer Struktur zwischen 10 und 60 µm, vorzugsweise zwischen 30 und 50 µm beträgt.

10. Verpackung nach einem der vorangehenden Ansprüche, **dadurch gekennzeichnet, daß** die Strukturtiefe einer Struktur zwischen 60 und 2000 µm, vorzugsweise zwischen 100 und 1000 µm beträgt.

11. Verpackung nach einem der vorangehenden Ansprüche, **dadurch gekennzeichnet, daß** die Strukturierung jeder Struktur im Werkzeug durch Ätzen, Lasern und/oder mechanische Bearbeitung erzeugt ist.

12. Verpackung nach einem der vorangehenden Ansprüche, **dadurch gekennzeichnet, daß** die Verpackung aus einer mehrschichtigen, vorzugsweise mindestens zweischichtigen Kunststofffolie hergestellt ist.

13. Verpackung nach einem der vorangehenden Ansprüche, **dadurch gekennzeichnet, daß** die einzige oder zumindest die äußerste Folienschicht gefüllt ist.

14. Verpackung nach Anspruch 13, **dadurch gekennzeichnet, daß** mineralische Füllstoffe, vorzugsweise Kalk als Füllmaterial vorgesehen ist, wobei der Anteil an Füllmaterial zwischen 10 und 30 Gew-Prozent betragen kann, vorzugsweise um die 20 Gew-Prozent.
